(19) Europäisches Patentamt
European Patent Office
Office européen des brevets

(11) **EP 1 813 796 A2**

(12) **EUROPEAN PATENT APPLICATION**

(43) Date of publication:
 **01.08.2007 Bulletin 2007/31**

(51) Int Cl.:
 *F02D 41/20* (2006.01)   *F02D 41/24* (2006.01)
 *F02D 41/38* (2006.01)

(21) Application number: **07250165.3**

(22) Date of filing: **16.01.2007**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **26.01.2006 GB 0601619**
 **05.10.2006 GB 0619727**

(71) Applicant: **Delphi Technologies, Inc.**
 **Troy, Michigan 48007 (US)**

(72) Inventors:
 • **Potter, Anthony**
  **Bucks, HP 136JG (GB)**
 • **Fallahi, Abdolreza**
  **HA5 4BP (GB)**
 • **Gray, Greer**
  **SW197AG (GB)**

(74) Representative: **Richardson, Mark Jonathan**
  **Keltie**
  **Fleet Place House**
  **2 Fleet Place**
  **London EC4M 7ET (GB)**

(54) **Controller and control method for an engine control unit**

(57)    A controller for determining drive pulse structures for controlling the operation of control valves of a fuel-injected engine, the engine comprising a first injector and at least one further injector, and the controller comprising: inputs for receiving engine data related to an engine system parameter; outputs for outputting a control function for controlling the injector valves of the first injector, the control function being derived from a control valve drive pulse structure; a processor for controlling the control function output from the controller wherein the processor is arranged to (i) progressively modify the control valve drive pulse structures, (ii) to detect injection events within the first injector by measuring changes in the engine data and (iii) to thereby determine the minimum width of the drive pulse structures that permit injection to take place.

FIGURE 5

**Description**

The present invention relates to the field of engine management and in particular relates to a method of and equipment for determining operating parameters of a fuel injected internal combustion engine and to engine control in dependence thereon. The invention additionally relates to a carrier medium carrying computer readable code for controlling a processor or computer to carry out said control method.

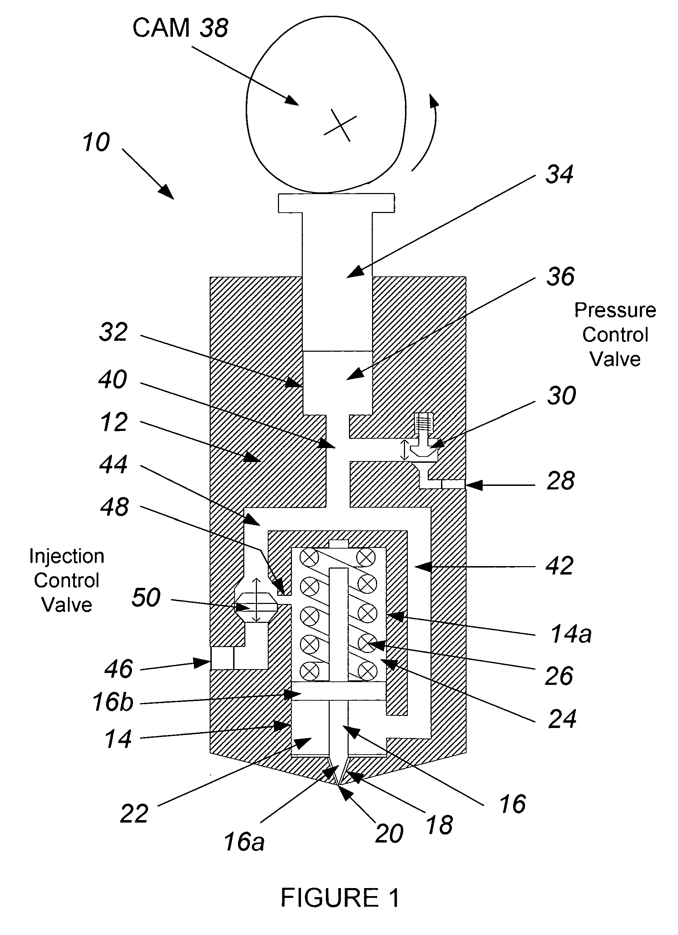

A known fuel injector 10 for use in a fuel injected engine is shown schematically in Figure 1. The fuel injector 10 includes a nozzle body 12 provided with a blind bore 14 within which a valve needle 16 is slidable.

The lower end 16a of the needle 16 is shaped to be engageable with a valve seating 18 defined by the end of the bore 14 to control fuel delivery through one or more outlet openings 20 provided in the nozzle body 12. A delivery chamber 22 is defined by the needle 16 and bore 14 and engagement of the valve needle 16 prevents fuel within the delivery chamber 22 flowing past the seating 18 and out through the outlet openings 20 into the associated engine cylinder or other combustion space.

The valve needle 16 is provided with a plug member 16b having a cross section equal to that of the bore 14. The lower surface of the member 16b defines a thrust surface such that fuel pressure within the delivery chamber 22 acts on the thrust surface to urge the needle 16 away from its seating 18.

The upper region 14a of the bore 14 defines, along with the upper surface of the member 16b, a control chamber 24 for fuel. A spring 26 located within the control chamber 24 acts on the upper end of the bore 14 and the upper surface of the member 16b to urge the valve needle 16 onto its seating 18.

Fuel is supplied to the injector from a source of pressurised fuel, for example from a low pressure source or from the common rail of a common rail fuel system. In use, fuel is supplied through an inlet region 28 which houses a pressure control valve 30. The pressure control valve 30 may be opened and closed to respectively allow and block the supply of fuel into and out of the injector 10.

The injector body 12 is provided with a further bore 32 within which a plunger 34 is slidable. The plunger 34 and bore 32 define a pump chamber 36. The plunger 34 is associated with a cam arrangement 38 such that rotation of the cam arrangement 38 causes the plunger 34 to slide within the bore 32.

The inlet region 28 is connected, when the pressure control valve 30 is open, to the pump chamber 36 by means of a supply passage 40. The supply passage branches 40 into two further supply passages 42, 44. Passage 42 connects the inlet region 28 and pump chamber 36 to the delivery chamber 22. Passage 44 connects to an outlet region 46 which is in communication with a fuel drain (not shown).

Passage 44 is connected via a restricted passage 48 to the control chamber 24. A needle control valve 50 is housed within the passage 44 and is operable to move from a first position in which the control chamber 24 is in communication with the pump chamber 36 and inlet region 28 and the outlet region 46 is blocked and a second position in which the flow of fuel from the pump chamber 36 or inlet region 28 to the control chamber 24 is blocked and the outlet region 46 is in communication with the control chamber 24 thereby allowing pressurised fuel within the control chamber 24 to dump to the fuel drain.

It is noted that the pressure control valve 30 and needle control valve 50 will typically be pressure balanced valves in order to make valve operation at high pressures easier.

Injectors used in fuel injection systems are generally controlled electrically by means of a current or voltage waveform applied to the injector. The properties or shape of the waveform applied to the injectors determines the type of injection performed by the injectors. For example, a first waveform may be arranged to cause the injector to generate a pilot injection followed by a single main injection while a second waveform may be arranged to generate a single main injection with no preceding pilot injection.

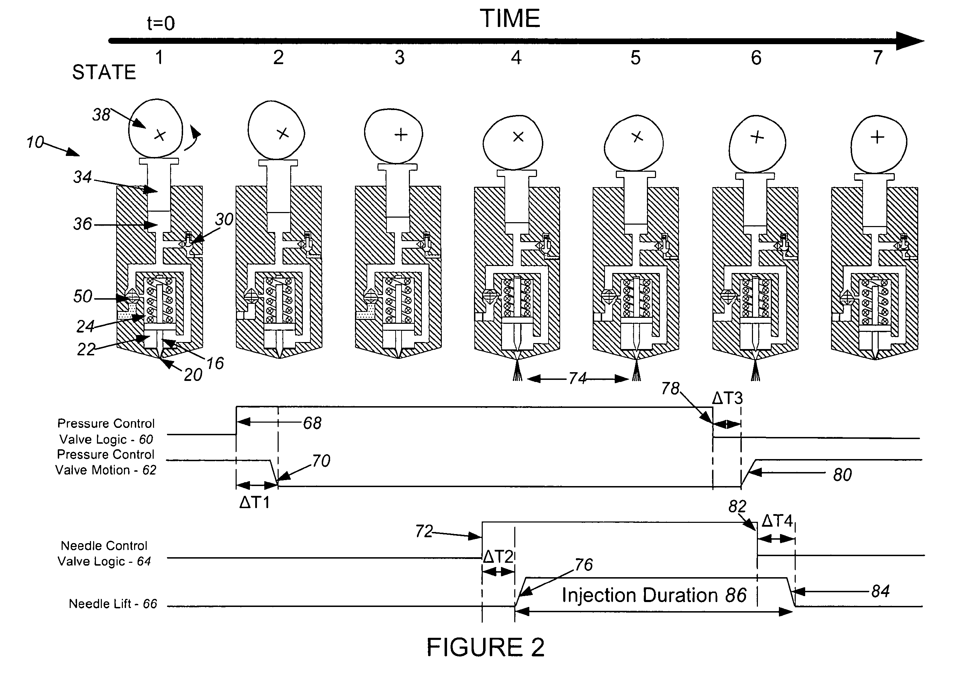

An example of the operation of the fuel injector of Figure 1 is shown in Figure 2. Figure 2 shows seven different injector states of the injector 10 over time (starting on the left at t=0 and moving to progressively later points in the injector cycle from left to right). It is noted that like numerals are used to denote like features between Figures 1 and 2. For the sake of clarity reference numerals have only been added to the injector at state 1. It is however appreciated that it is the same injector in all the various states shown in Figure 2.

The Figure additionally shows the pressure control valve control logic structure 60, the motion of the pressure control valve 62, the needle control valve logic structure 64 and the position 66 of the needle 16 over time. The needle control valve logic structure 64 defines when fuel is injected and the pressure control valve logic structure 60 details when the pressure control valve is opened and closed (which therefore affects the pressure within the system).

The logic structures define the shape of the current waveforms of the control signals that are sent from an engine control unit (not shown in Figure 2) to the injectors of the engine.

In state 1, the needle control valve 50 is closed such that fuel cannot flow to the fuel drain. The pressure control valve 30 is open and low pressure fuel flows into the injector 10 and therefore into the pump chamber 36, control chamber 24 and delivery chamber 22. The needle 16 is engaged with its seating 18 such that fuel is unable to pass through the outlet opening 20 into the combustion chamber.

The various logic structures (60, 64) and valve 62 and needle position 66 are also depicted for position 1.

Moving to state 2, it can be seen that the logic structure 60 relating to the pressure control valve 30 has been changed, i.e. a control signal has been sent to the pressure control valve to close. This change is represented by a step up 68 in the logic structure line 60.

It is noted that due to the inertia of the system that the valve 30 does not move at exactly the same time as the logic structure 60 changes. However, after a short time delay (ΔT1) the valve 30 moves from open to closed as represented by the step down 70 in the pressure control valve motion line 62.

It is noted that the cam arrangement 38 has rotated slightly compared to its position in state 1 and that therefore the plunger 34 has moved down into the bore 32 slightly.

In state 3, the pressure control valve 30 is still closed. The cam arrangement 38 has rotated further however and the plunger 34 has been depressed further into the bore. The pump chamber 36 has therefore reduced in volume compared to states 1 and 2. The fluid pressure within the injector 10 rises as the plunger is depressed.

When the pressure within the injector 10 has risen to a sufficient level the needle control valve 50 is opened (as represented by the step up 72 in the logic structure 64 for the needle valve 50). Fuel within the control chamber 24 which is under pressure flows past the needle control valve 50 and out the outlet region 46 to the fuel drain. The pressure within the control chamber 24 therefore falls and the pressure of fuel acting on the lower surface of the member 16b is sufficient to overcome the action of the spring 26 and to lift the needle 16 from its seating 18. Fuel is then injected 74 from the injector 10 into the combustion chamber.

The needle lift is shown as the step up 76 on the line 66. Again, it is noted that there is a delay (ΔT2) between the change in the needle control logic structure 64 and the needle lift 76.

In state 5, the fuel within the control chamber continues to flow to the fuel drain. The needle is still in the lifted position and fuel is still being supplied to the combustion chamber. The plunger is near the bottom of its downward motion.

Between states 5 and 6, the logic structure 60 of the pressure control valve 30 changes again in order to open the pressure control valve 30 again. The logic structure 60 correspondingly shows a step down 78. After a short delay (ΔT3) again the valve 30 moves from closed to open (step up 80 in motion line 62).

During state 6, the needle control valve 50 is closed again (as represented by the change 82 in the logic structure 64). After a short delay (ΔT4) the needle 12 moves back (step down 84) to its seating 18 and the injection of fuel into the combustion chamber ends. State 7 equates, in part, to state 1 and the progression shown from state 1 to state 7 represents one injection cycle, though it does not include the filling part of the cycle which occurs over part of the rest of the rotation of the cam.

Injection duration 86 is indicated as the time between the needle lifting 76 from its seating and then returning 84 once again to its seating.

In order to optimise the efficiency of the engine and to minimise emission of harmful substances and noise development, it is necessary to very accurately maintain the start of injection, and the start of combustion resulting there from, required for the respective operational state of the engine. It is also necessary to accurately govern the quantity of fuel supplied to the engine in order to maintain stable engine operation.

In general, however, the injection equipment will experience wear and tear during the lifetime use of the system. This results in the degradation of the fuel injection equipment and overall engine performance in terms of emissions and power.

GB-A-2305727 describes an arrangement in which a sound sensor is mounted upon or associated with an engine. The output of the sensor is filtered and used to monitor movement of an injector needle and to monitor combustion. A method is described whereby the minimum drive pulse length which must be applied to an injector to cause the injector to open can be derived.

A further method for counteracting the effect of wear and tear within the system is disclosed in US 6082326. An accelerometer is mounted on the engine and listens for each injection event. This allows the engine management system to match injection pulse durations to the characteristics of each individual injector and to establish the minimum drive pulse required for each injector. This provides consistently better fuel economy and emission performance by reducing fuel volume tolerances.

The above methods and devices require the provision of additional sensors within the engine system and suitable signal analysis means to analyse the detected signals and determine the various injector events occurring across the engine.

The present invention seeks to overcome or substantially mitigate the above mentioned problems and to provide a method and apparatus for determining minimum drive pulses for the injectors of a fuel injected engine without the need for additional sensors and associated signal processing means.

Accordingly a first aspect of the present invention provides a controller for determining drive pulse structures for controlling the operation of control valves of a fuel-injected engine, the engine comprising a first injector and at least one further injector, and the controller comprising: inputs for receiving engine data relating to an engine system parameter, outputs for outputting a control function for controlling the injector valves of the first injector; the control function being derived from a control valve drive pulse structure; a processor for controlling the control function output from the controller wherein the processor is arranged to (i) progressively modify the control valve drive pulse structures, (ii) to detect injection events within the first injector by measuring changes in the engine data and (iii) to thereby determine the minimum width of the drive pulse structures that permit injection to take place.

The present invention recognises that the provision of separate vibration sensors or accelerometers to determine pulse structures of injectors within an engine is not necessary.

The invention recognises that varying the pulse structures of an injector under test will have the effect that one or more engine system parameters will vary. The invention may monitor a number of engine system parameters. For example, fuel value data relating to the quantity of fuel injected per injection cycle per injector for the at least one injector may be monitored. Alternatively, the rotation of the engine's crank wheel may be tracked by monitoring the times between successive crank teeth on the flywheel.

The present invention allows the detection of engine injection events by measuring changes in the monitored engine system parameters. It is noted that the controller of the present invention may monitor one or more of the above parameters at any given time.

It is noted that the present invention may be applied to a fuel injection system in which the injectors have pressure control and needle control valves (as shown, for example in Figure 1). The invention can equally be applied however in whole or in part to single valve components operating using a mechanical injector, as well as other two valve systems, for example where the pump and injector are separate items, e.g. unit pump-pipe-injector arrangements. Conveniently, however, the injector comprises a pressure control valve and a needle control valve.

Conveniently, the processor within the controller determines the minimum drive pulse structure for the pressure control valve first. The controller may then subsequently determine the minimum drive pulse structure for the needle control valve.

In a first embodiment the engine system parameter monitored by the controller is fuel value data.

At a given moment, the fuel used by an engine per complete injection cycle (i.e. the fuel used during a cycle in which all the cylinders normally fire) will remain substantially constant. The term "fuel value" refers to the quantity of fuel that is injected per injection cycle per (injector) cylinder of the engine. If the drive pulse structures of a first injector within the engine are modified sufficiently, that injector will cease injecting fuel into its associated cylinder. Since the total amount of fuel injected into the engine at any time will be maintained by the action of the engine management system, the removal of one injector from operation means that the fuel quantity per cylinder passing through the remaining injectors (the fuel value) will increase. Conversely, if the injector re-commences injection the fuel quantities per cylinder passing through the remaining injectors will decrease (relative to the increased level).

The present invention utilises the changing fuel values at the remaining injectors within the engine to determine whether injection is taking place at the injector under test. By appropriately varying the drive pulse structures applied to the control valve(s) of the first injector and measuring the fuel value at other injectors it is possible to determine the minimum drive pulses that will result in a control function that will cause injection to occur.

Within the normal operation of an engine system, the quantity of fuel required to maintain a certain engine speed is, at some point, converted to a cranking angle via a process called linearization. As the engine experiences general usage and wear and tear a time varying offset will be introduced into the relationship between fuel quantity and crank angle. In order to determine this offset and to maintain the relationship between these variables, the individual characteristics of each individual injector (i.e. the minimum drive pulse of each injector) need to be determined. The present invention allows the engine system to be periodically re-calibrated by calculating the minimum drive pulses that need to be applied to the various control valves within the fuel injected engine.

Preferably, when the controller determines the drive pulse structures, the engine is governed to a substantially constant engine speed, for example the engine is idling. The state of the engine should be stable such that engine speed and fuel value are relatively constant over time.

Conveniently, the minimum drive pulse for the pressure control valve may be determined as follows. Starting with an injector that is injecting fuel, the processor is arranged to firstly reduce the pulse widths for all the control valves within the injector under test such that injection stops. The processor then progressively increases the pulse widths for the control valves until injection is detected. The injection event can be determined by the change in fuel value that occurs when injection re-commences through the injector. The drive pulse width for the pressure control valve at the point that injection re-commences can be set as the minimum drive pulse for the pressure control valve. It is noted that during the determination of the minimum drive pulse for the pressure control valve, the needle control valve is left open. This is to ensure that the controller is only effectively measuring the logic pulse length required to generate sufficient pressure in the delivery chamber of the injector that is required to overcome the pre-loading of the spring that holds the needle against its seating.

Conveniently, once the minimum drive pulse for the pressure control valve has been determined the processor can determine the minimum drive pulse for the needle control valve. In order to do this the processor sets and holds the drive pulse for the pressure control valve at the recently determined minimum value. The start time of the drive pulse for the needle control valve can then be progressively moved later such that the width of the drive pulse for the needle control valve is progressively decreased until injection stops from the injector. The width of the drive pulse just before injection stops can be set as the minimum drive pulse for the needle control valve.

In a second embodiment the engine system parameter monitored by the controller is data related to the rotation of a crank wheel, e.g. the speed of rotation of the crank or the crank tooth time.

The crank wheel (or flywheel) is part of the crankshaft assembly within the engine system that converts the linear motion of the pistons into rotational motion that is transmitted to the load. A typical crank wheel comprises a number of slots or teeth machined at regular intervals around its periphery. A sensor, for example a variable reluctance sensor, can be used to detect the motion of the crank teeth and therefore provide position information that can be used for engine speed measurement and fuel pulse scheduling. As used herein the term "crank tooth time" refers to the time between successive crank teeth on the flywheel.

The present invention recognises that as the control valve pulse structure for the injector under test is varied the crank speed of the crank wheel will vary. Monitoring changes in the crank speed can therefore provide a means for determining engine injection events such that the minimum width of the drive pulse structure for the test injector can be determined.

In the second embodiment of the present invention therefore, the controller receives data relating to the rotation of the crank wheel.

Conveniently, the processor can monitor the speed of the crank wheel across engine injection cycles. Alternatively, the processor can monitor crank tooth times across the engine injection cycle.

A typical crank wheel will comprise a number of teeth which are associated with the action of one of the injectors within the engine system. Preferably, the processor monitors the crank wheel speed with respect to tooth number for the injector under test and then subtracts these speed values from one of the other injectors within the engine in order to derive a relative crank wheel speed with respect to tooth number. Changes in the derived relative crank wheel speed can indicate when an injection event has occurred.

Conveniently, the relative changes in crank wheel speed can be monitored for a particular crank tooth or combination of teeth as the control valve pulse drive structure is varied for the injector under test. Changes in the relative crank wheel speed for a particular crank tooth or combination thereof can therefore indicate that an injection event has occurred.

Conveniently, therefore, the minimum drive pulse for the pressure control valve may be determined as follows. Starting with an injector that is injecting fuel, the processor is arranged to firstly reduce the pulse widths for all the control valves within the injector under test such that injection stops. The processor then progressively increases the pulse widths for the control valves until injection is detected. The injection event can be determined by changes in the measured crank wheel speed or in the crank tooth times at given points in the injection cycle that occur when injection re-commences through the injector. The drive pulse width for the pressure control valve at the point that injection re-commences can be set as the minimum drive pulse for the pressure control valve. It is noted that during the determination of the minimum drive pulse for the pressure control valve, the needle control valve is left open. This is to ensure that the controller is only effectively measuring the logic pulse length required to generate sufficient pressure in the delivery chamber of the injector that is required to overcome the pre-loading of the spring that holds the needle against its seating.

Conveniently, once the minimum drive pulse for the pressure control valve has been determined the processor can determine the minimum drive pulse for the needle control valve. In order to do this the processor sets and holds the drive pulse for the pressure control valve at the recently determined minimum value. The start time of the drive pulse for the needle control valve can then be progressively moved later such that the width of the drive pulse for the needle control valve is progressively decreased until injection stops from the injector. The width of the drive pulse just before injection stops can be set as the minimum drive pulse for the needle control valve.

Conveniently, the processor progressively varies the drive pulses for the control valves by performing a number of iterations with different drive pulses as appropriate in each iteration.

According to a second aspect of the present invention there is provided a method for determining drive pulse structures for controlling the operation of control valves of a fuel-injected engine, the engine comprising a first injector and at least one further injector, and the method comprising: receiving engine data relating to an engine system parameter; outputting a control function for controlling the injector valves of the first injector, the control function being derived from a control valve drive pulse structure; controlling the control function output from the controller by (i) progressively modifying the control valve drive pulse structures, (ii) detecting injection events within the first injector by measuring changes in the engine data and (iii) determining the minimum width of the drive pulse structures that permit injection to take place.

It will be appreciated that preferred and/or optional features of the first aspect of the invention may be provided in the second aspect of the invention also, alone or in appropriate combinations.

According to a still further aspect of the present invention there is provided a carrier medium for carrying a computer readable code for controlling a processor, computer or other controller to carry out the method of the first aspect of the invention.

The invention extends to a vehicle comprising a controller according to the first aspect of the present invention and also to a diagnostic unit for use with a vehicle, the unit comprising a controller according to the first aspect of the present invention.

In order that the invention may be more readily understood, reference will now be made, by way of example, to the accompanying drawings in which:

Figure 1 shows the structure of a known fuel injector;

Figure 2 illustrates the normal operation of the fuel injector of Figure 1 over time;

Figure 3 illustrates a test procedure in accordance with a first embodiment of the present invention for determining the minimum drive pulse width of the pressure control valve of an injector;

Figure 4 illustrates a test procedure in accordance with a first embodiment of the present invention for determining the minimum drive pulse width of the needle control valve of an injector;

Figure 5 illustrates the needle control, pressure control and fuel value parameters that are measured during the test procedures of Figures 3 and 4;

Figure 6 illustrates a typical flywheel of an engine;

Figure 7 illustrates the output of a sensor monitoring the rotation of the flywheel of Figure 6 and shows the time between successive crank teeth on the flywheel;

Figure 8 shows plots of crank tooth times and crank speeds for two injectors on the flywheel of Figure 6 in accordance with a second embodiment of the present invention;

Figure 9 shows the relative crank speed as a function of crank tooth number between two injectors for two different drive pulse widths in accordance with a second embodiment of the present invention;

Figure 10 shows the relative crank speed for a particular crank tooth on the flywheel as a function of logic pulse width in accordance with a second embodiment of the present invention;

Figure 11 illustrates a controller for controlling operation of an injector of a fuel injection system.

In the following description, the term "fuel value" is used to define the quantity of fuel that is injected per injection cycle per cylinder of the engine. The quantity of fuel is traditionally measured in milligrams. The term "minimum drive pulse" or "MDP" is used to define the length of a control feature in the logic structure of either the pressure control or needle control valves that results in injection of fuel into the combustion chamber of the engine.

For a given steady state engine condition, eg at idle, the controller will be trying to ensure the total fuel injected by all the injectors within an engine remains constant. The controller's fuel value under such cases will be related to the total net fuel injected into the engine per injection cycle divided by the total number of injectors. If an injector fails to inject fuel then the controller will attempt to correct for this by increasing the fuel value, with the result that the fuel injected through each of the remaining (operating) injectors will increase until the total fuel injected through all injectors is once again close to the previous level. So, for a six cylinder engine idling with about 15mg per injector of fuel being injected, there will be a fuel value close to 15mg. Hence, there will be some 90 mg of fuel injected by all injectors over one complete cycle. If one injector becomes inoperative, then the controller will tend to increase the fuel value until the 90 mg are shared by the remaining five active injectors and the fuel value will then be close to 18mg (90 divided by 5).

The present invention recognises that changes in the logic structure of the injector valves can be derived by detecting changes in the fuel value.

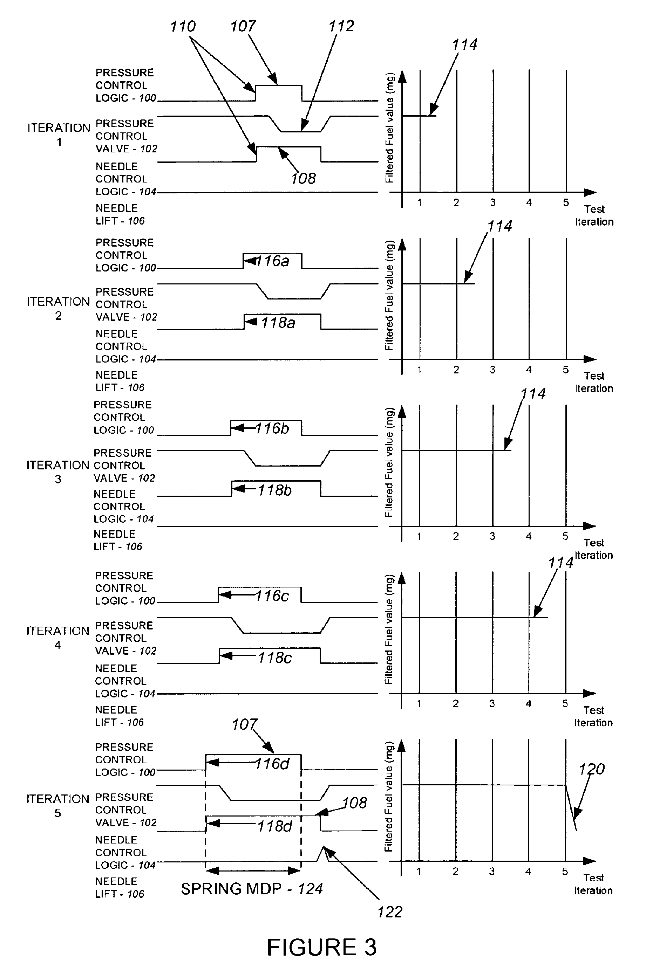

Figure 3 shows the test procedure according to a first embodiment of the present invention for determining the minimum drive pulse of the pressure control valve logic pulses that will generate a control waveform that will cause fuel injection into the combustion chamber.

Five separate iterations in the test procedure are shown but it will be appreciated that more or fewer iterations could be used depending on the accuracy of measurement required. The Figure shows the pressure control valve control logic structure 100, the motion of the pressure control valve 102, the needle control valve control logic structure 104 and the position 106 of the needle 12 over time. The needle control valve structure 104 defines when fuel is injected and the pressure control valve logic structure 100 details when the pressure valve is opened and closed (which therefore affects the pressure within the system).

Initially, for one injector within the engine, the pulse widths in the logic structure are set to a short enough value such that injection does not occur into the cylinder associated with that injector. The fuel value across the remaining injectors within the engine is allowed to stabilise and then the following procedure is initiated.

In Iteration 1, the pressure control valve is initially open. Logic pulses (107, 108) for the pressure control and needle control valves are shown in which the pulses commence at the same point 110 in time. The closing of the pressure control valve is depicted by the trough 112 in the pressure control valve motion line 102. It can be seen that this logic structure (100, 104) does not result in any needle lift (the needle lift trace 106 is a flat line). The lack of needle lift is confirmed by the unchanging fuel value 114 (see fuel value versus iteration graph for Iteration 1).

In Iterations 2 to 4 the length of the drive pulses (107, 108) in the logic structure for both the pressure control valve and the needle control valve are progressively lengthened. This is depicted by the lengthening arrows (116a-c, 118a-c). In each iteration it is seen that the fuel value 114 remains unchanged therefore indicating to the device that is controlling the test that no injection has taken place from the injector.

In Iteration 5 the drive pulse 106 in the pressure control logic structure has been lengthened 116d sufficiently that injection of fuel takes place. The injection of fuel is indicated by the falling fuel value 120 (since there is now an extra injector that is injecting fuel the total fuel load is spread over an extra injector and consequently the amount of fuel delivered via each of the other injectors is reduced compared to Iteration 4) and is also shown by the spike 122 in the needle lift line 106. The lengthening of the needle control pulse is shown by 118d.

The length of the pressure control drive pulse in Iteration 5 corresponds to the minimum drive pulse (MDP) 124 for the pressure control valve for this particular injector that is required to enable injection to take place.

It is noted that during the sequence of events described above in relation to Figure 3, it is arranged that the needle control valve 50 is left open over the period that injection may take place. This is so the needle control valve does not affect the determination of the MDP for the pressure control valve and that the controller (not shown in Figure 3) is only effectively measuring the logic pulse length required to generate sufficient pressure required in the delivery chamber 22 to overcome the pre-loading of the spring 26.

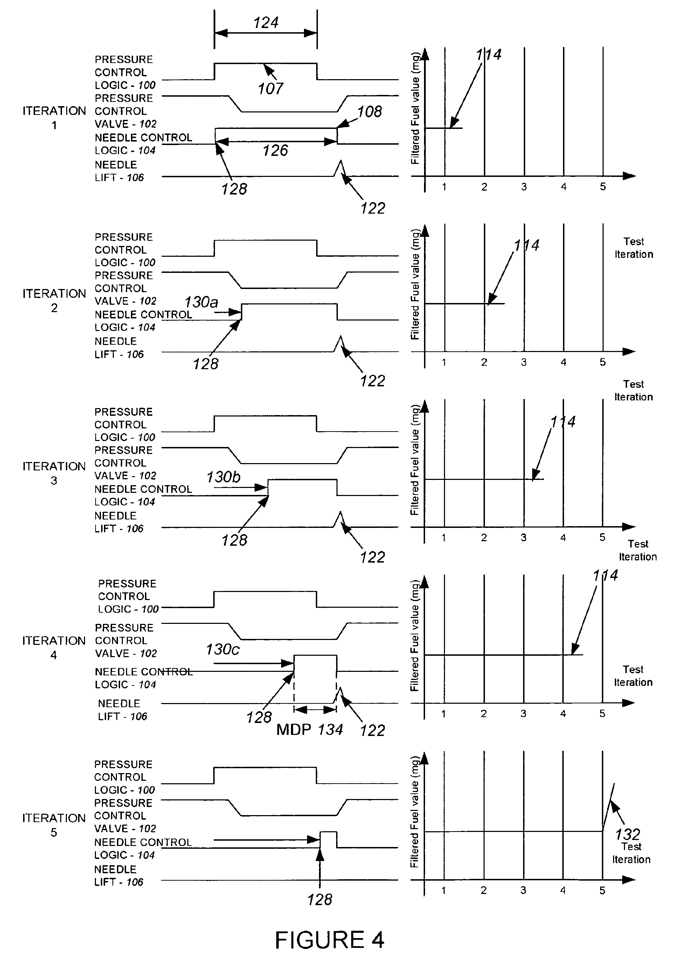

Turning now to Figure 4, the test procedure according to a first embodiment of the present invention for determining the minimum drive pulse of the needle control valve logic pulses that will generate a control waveform that will permit fuel injection into the combustion chamber is shown.

It is noted that the needle control valve test follows the pressure control valve test as described in relation to Figure 3. It is further noted that Iteration 1 as shown in Figure 4 is identical to Iteration 5 shown in Figure 3. Like numerals have been used to denote like features between Figures 3 and 4.

The object of the needle control valve test is to reduce the length 126 of the drive pulse 108 of the needle valve until injection from the injector ceases. During this part of the test the pressure control valve drive pulse is held at the recently determined minimum value 124.

As already noted above, in Iteration 1 of Figure 4, the logic structures (100, 104) of the pressure control and needle control valves are such that injection is taking place from the injector. The object of this part of the test procedure is therefore to reduce the drive pulse 108 for the needle control valve until such time as injection stops. The length of the drive pulse immediately before this happens will then be the minimum drive pulse that can be used with the needle control valve at this test condition.

The loss of injection will be accompanied with an increase in the detected fuel value 114 (as the total fuel load is spread over a reduced number of injectors).

In Iterations 2 to 4 the starting point 128 of the needle control valve drive pulse 108 is progressively moved to later start times (as indicated by the lengthening arrows 130a-c). In each iteration it is seen that the measured fuel value 114 is unchanged and that injection is still occurring from this injector.

In iteration 5, however, the pulse structure 104 for the needle control valve has been shortened to such an extent that injection stops. This is indicated by the increase 132 in the fuel value (as the total fuel load is now being spread over one less injector than in Iteration 4).

The drive pulse length in Iteration 4 can then be set as the minimum drive pulse 134 for the needle control valve that will still allow injection to take place.

It is important to note that prior to the test procedure at Iteration 1 in either of Figures 3 or 4 the fuel value 114 measured by the controlling device should be allowed to stabilise to ensure that the procedure is accurate.

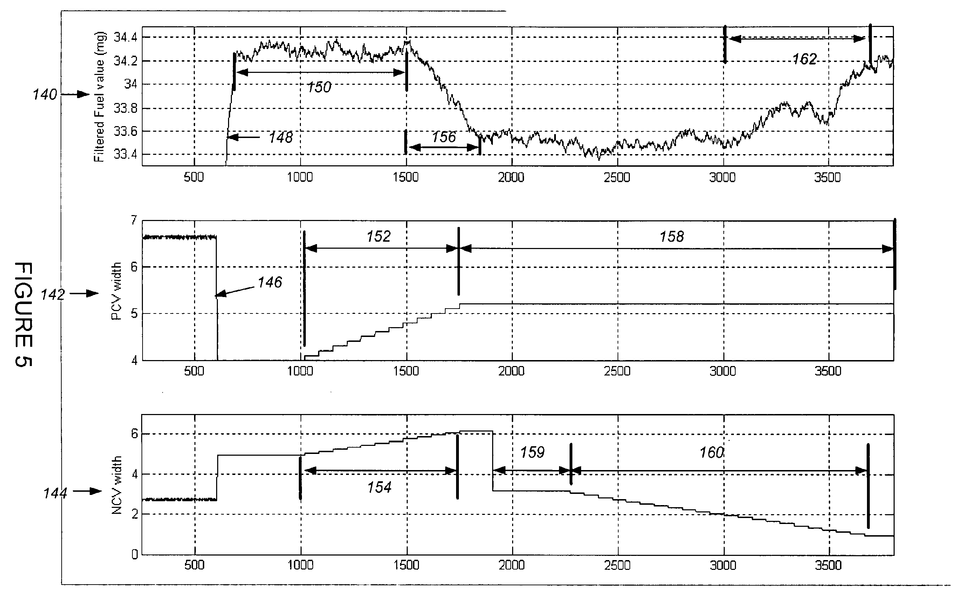

Figure 5 shows the various parameters that the control device monitors and controls in the performing the above test procedures.

The top graph 140 shows the measured fuel value 114 over time. The middle graph 142 shows the width of the pressure control valve drive pulse 107 over time and the bottom graph 144 shows the width of the needle control valve drive pulse 108 over time.

Initially, the engine is governed to a "constant" engine speed, for example idling. The state of the engine should be stable such that engine speed and fuel value are relatively constant over time.

For one injector the widths of the pressure and needle control valve pulses 107, 108 are set to a sufficiently low level that no injection occurs from that injector. This is shown by the falling pressure control width line 146 in the middle figure.

As the injection stops from the chosen injector the fuel value will rise (as explained above). The sharp fuel value rise is highlighted by arrow 148 in the top graph 140 of Figure 5.

The fuel value is then allowed to stabilise 150 for a period at the new, heightened fuel value. It can be seen from Figure 5 that between roughly time units 700 to 1000 the fuel value is allowed to stabilise.

The pressure control valve drive pulse is then progressively increased (see section 152 of the middle graph 142). At the same time the needle control valve pulse is also progressively increased (see section 154 of the bottom graph 144).

Once the pressure and needle control valve drive pulses have been increased sufficiently injection will recommence. This is indicated by a drop in the fuel value (see section 156 of the top graph 140). When the drop in the fuel value is detected (this corresponds to the end of section 156), the minimum drive pulse for the pressure control valve is defined (in the example shown this is approximately 5.2 units on the pressure control valve graph 142).

The pressure control valve drive pulse is then held at the minimum value. This is indicated by the straight line section 158 on the pressure control graph 142 that runs from time unit 2000 onwards.

The fuel value is again allowed to stabilise before the needle control valve drive pulse is progressively decreased (see section 160 on the bottom graph 144) until injection is lost again. It is noted that the straight line 159 between time unit 1900 and 2250 on the bottom graph represents the period during which the fuel value is allowed to stabilise.

At the point at which injection is lost the fuel value increases again (see section 162 of the top graph 140). When the change in this fuel value is detected, the minimum drive pulse for the needle control valve can be defined. (In the example shown in Figure 5 the needle control valve minimum drive pulse is shown as approximately having a width of 1 unit.)

The calibration procedures described above in relation to Figures 3 to 5 are then repeated for each injector within the engine. Once this has been completed the characteristics of each injector will have been determined thereby allowing the engine to be operated more consistently.

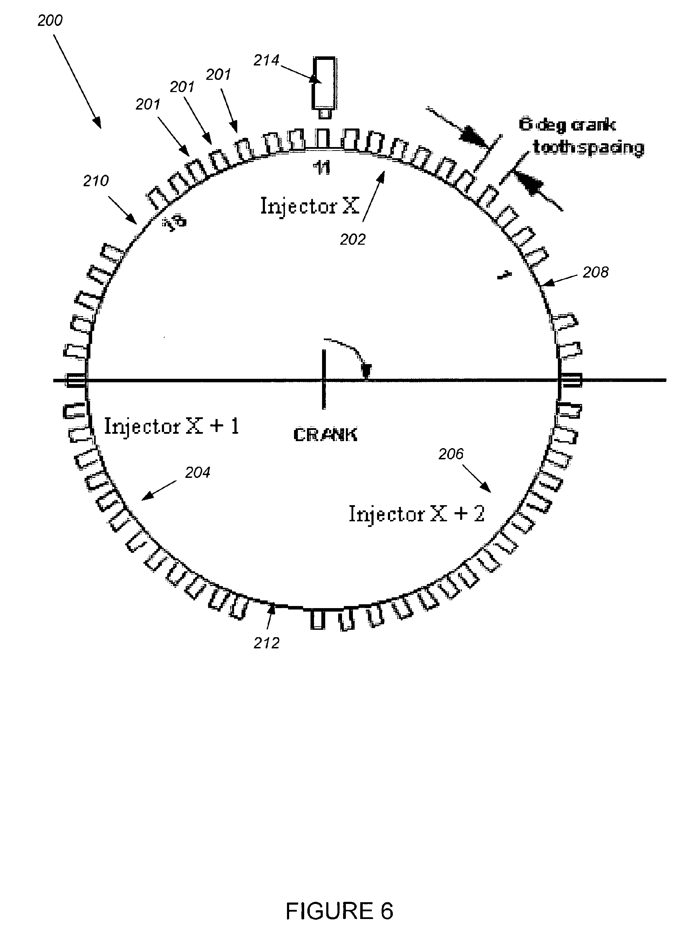

It is noted that Figures 6 to 10 either relate to or are useful for understanding a second embodiment of the present invention.

Figure 6 illustrates a typical flywheel 200. It can be seen that the flywheel comprises a number of teeth 201 on its outer periphery which are arranged into three groups (202, 204, 206). Each group (202, 204, 206) is associated with an injector (injector X, injector X+1 and injector X+2) and each group comprises 18 teeth which are regularly spaced at 6-degree intervals. The group of teeth for injector X are partially numbered (teeth 1, 11 and 18 are numbered).

Three regions (208, 210, 212) on the flywheel are not machined, ie have no teeth..

A sensor 214, for example, a variable reluctance sensor, is shown opposite tooth 11 in group 202. This sensor is used to detect motion of the crank teeth 201 and the decoded signal output from the sensor is used to provide position information which is used for engine speed measurement and fuel pulse scheduling. It is noted that any suitable sensor may be used to measure crank tooth motion, e.g. an optical based sensor may be used.

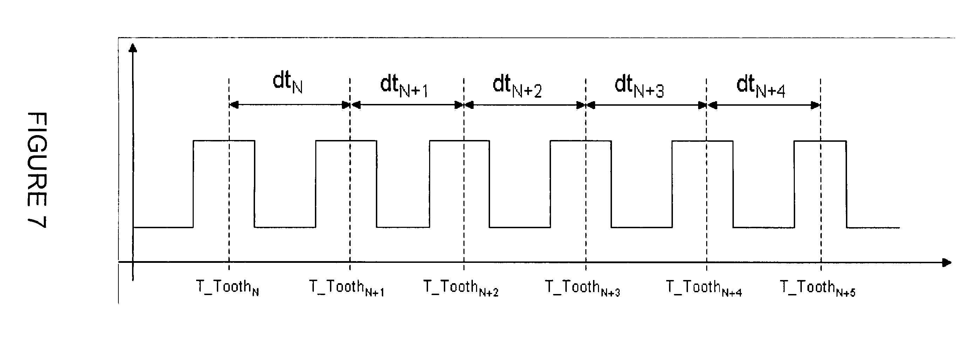

The crank tooth time is the time between successive crank teeth. This is illustrated in Figure 7 which shows the decoded signal output from the sensor of Figure 6. The time between tooth N and tooth N+1 is $dt_N$:

$$dt_N = T\_Tooth_{N+1} - T\_Tooth_N$$

where $T\_Tooth_N$ refers to the absolute time for tooth N.

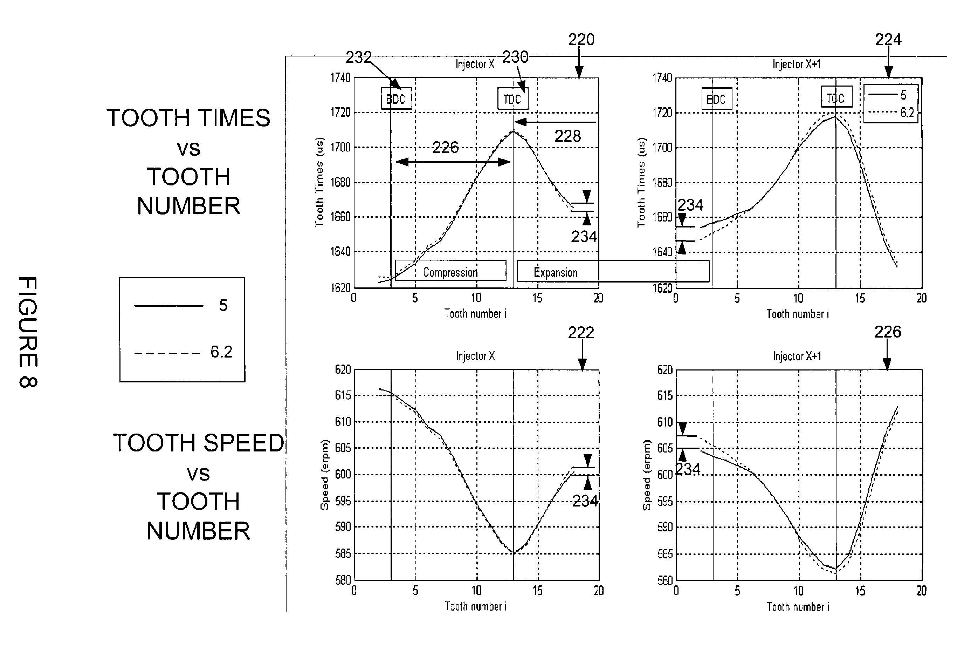

Figure 8 shows an example for crank tooth times and crank speeds for a test injector X and a subsequent injector X+1 in the firing order.

Figure 8 shows four separate graphs (220, 222, 224, 226). Graphs 220 and 222 relate to injector X and graphs 224 and 226 relate to injector X+1. The graphs show an example of the crank tooth times and crank tooth speeds for the two injectors for two different injector logic pulse widths (5 and 6.2 degrees). It is noted that the different logic pulse widths are applied to the test injector, injector X.

Graph 220 shows a plot of tooth times versus tooth number for injector X for two different logic pulse widths (5 degrees and 6.2 degrees). The compression 226 and expansion 228 phases of the piston are indicated on the plot and the "top dead centre" 230 and "bottom dead centre" 232 positions of the piston are indicated. It can be seen that the crank wheel slows down during the compression stroke and the crank times increase. Conversely, as the crank wheel enters the expansion stroke the crank wheel speeds up and the crank times decrease.

A difference 234 in the crank speed or tooth times can be seen at the end of the expansion stroke between the case where there is no combustion (5 degrees) and the case where there is combustion occurring (6.2 degrees). It can be seen from the graphs that the crank wheel speeds up more when combustion is occurring.

It is noted that the difference 234 in crank speed/ tooth times is also visible at the start of the compression phase for injector X+1 (see graphs 224 and 226).

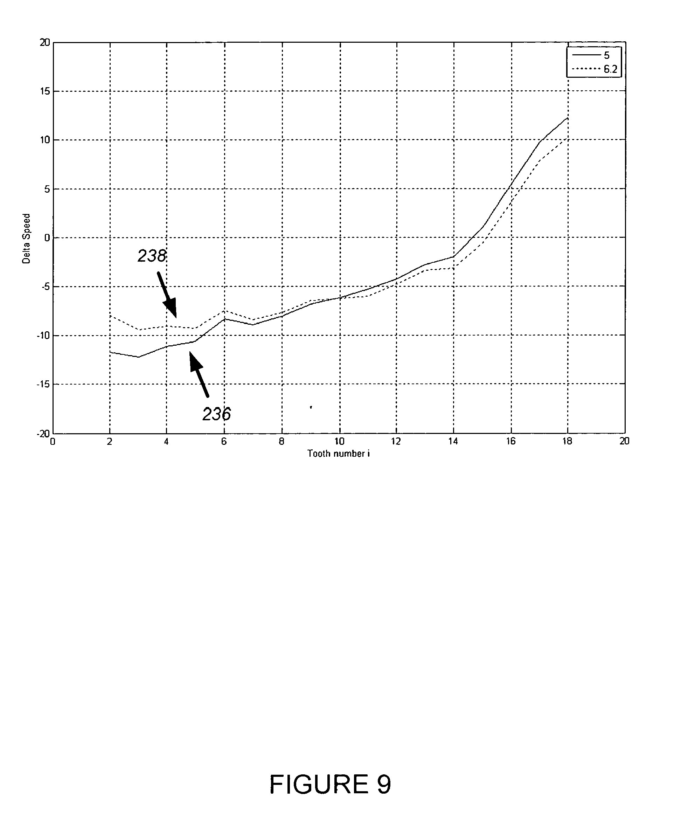

The crank speed plot 222 with respect to tooth number for injector X may be subtracted from the crank speed plot 226 with respect to tooth number for injector X+1 to give a relative crank speed plot. This is shown in Figure 9. It is noted that the y axis, labelled "Delta speed", represents the relative crank speed between injector X and injector X+1. The relative crank speed for both pulse widths is shown (the trace for 5 degrees is labelled 236 and the trace for 6.2 degrees is labelled 238).

Using Figure 9, the change in the relative crank speed for a specific tooth (or some combination thereof) can be monitored as the drive pulse structure applied to the test injector is varied.

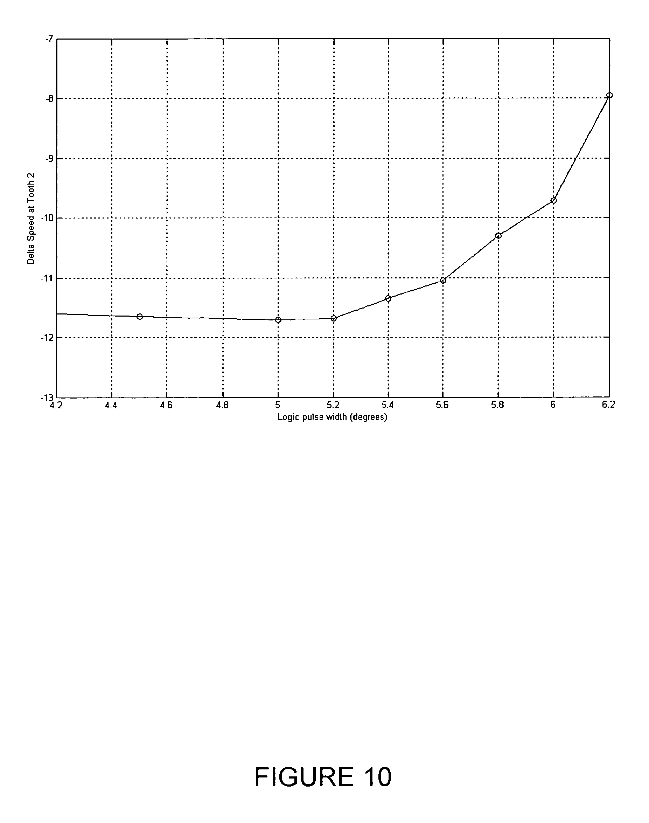

Figure 10 shows, by way of example, the change in the relative crank speed for tooth 2 as the width of the drive pulse varies. It can be seen that before combustion begins the relative crank speed is fairly constant. However, as combustion starts, the crank wheel moves faster and a discernable change in the relative crank speeds can be detected. In this case, Figure 10 indicates that combustion begins for a drive pulse of width around 5.2 degrees.

It is noted that the above mechanism according to the second embodiment of the invention for determining the minimum width of the drive pulse structures that permit injection to take place may be performed on both the needle control valve and pressure control valve of the test injector during the main injection pulse of the injector. However, it is noted that the above mechanism may also be applied to a pilot pulse.

Pilot injection involves the introduction of a small amount of fuel prior to the main power-producing injection event. The pilot pulse aids smoothing of the pressure characteristic of the overall combustion event and hence reduces total combustion noise.

The advantage of performing the above minimum drive pulse mechanism by means of crank speed/tooth time monitoring during the pilot pulse is that vibrational effects that occur when an injector misfires are reduced compared to the same process being performed during the main pulse.

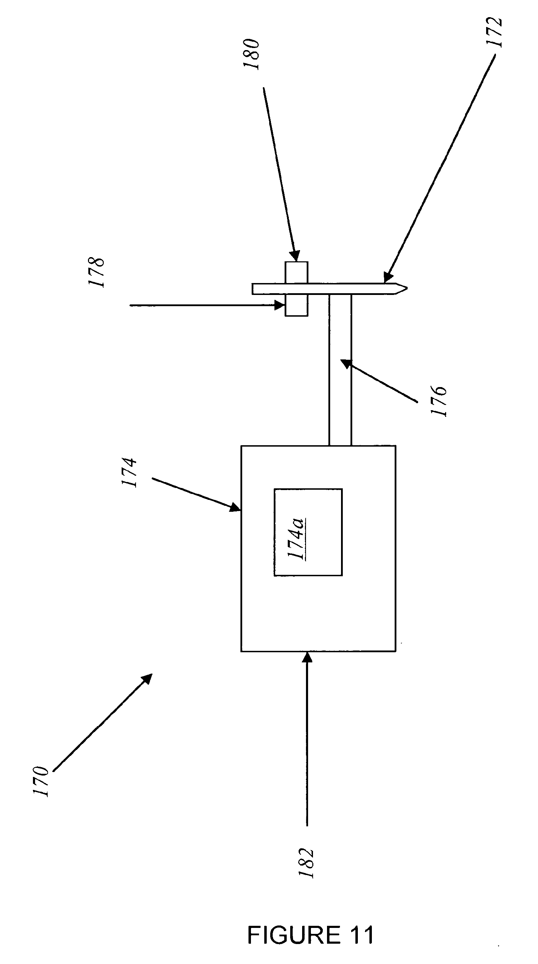

Figure 11 illustrates a control unit according to an embodiment of the present invention used to effect the test procedures described in relation to Figures 3 to 10 above.

Referring to Figure 11, a fuel injection system 170 comprises one or more injectors 172 (one of which is shown in this example) controlled by means of an engine management system 174 or controller including a computer or processor 174a. The controller is arranged to generate an injector control function 176, typically in the form of an electrical current, which is applied to the injector to control the movement of the injector valve needle (not shown in Figure 11). The control function takes the form of a current waveform that is applied to an electromagnetic actuator. The form of the current waveform is determined by the logic control structures, e.g. as shown in Figures 3 and 4 above. The injector of Figure 11 comprises two actuators (178, 180), one of which controls the needle control valve (which controls injection of fuel) and the other which controls the pressure control valve (which tends to control the pressure within the injector).

Fuel value data 182 is input into the controller 170 in order to allow the control function to be determined.

It is noted that the controller 170 could be incorporated within the engine control unit of a vehicle or alternatively could be incorporated within a specialist testing device to be used during the course of a routine vehicle service.

The embodiments described above and, in particular, in relation to Figure 11 have related to the control of electromagnetic actuators by the application of a current waveform (determined by the logic control structures) to the injector in question. It is noted that the logic control structures described above may equally determine voltage waveforms which may be used to control the operation of, for example, piezoelectric actuators.

It will be understood that the embodiments described above are given by way of example only and are not intended to limit the invention, the scope of which is defined in the appended claims. It will also be understood that the embodiments described may be used individually or in combination.

**Claims**

1. A controller for determining drive pulse structures for controlling the operation of control valves of a fuel-injected engine, the engine comprising a first injector and at least one further injector, and the controller comprising:

   inputs for receiving engine data relating to an engine system parameter;
   outputs for outputting a control function for controlling the injector valves of the first injector, the control function being derived from a control valve drive pulse structure;
   a processor for controlling the control function output from the controller;

   wherein the processor is arranged to (i) progressively modify the control valve drive pulse structures, (ii) to detect injection events within the first injector by measuring changes in engine data and (iii) to thereby determine the minimum width of the drive pulse structures that permit injection to take place.

2. A controller as claimed in Claim 1, wherein the injector comprises a pressure control valve and a needle control valve.

3. A controller as claimed in Claim 2, wherein the processor is arranged to derive the minimum drive pulse structure for the pressure control valve.

4. A controller as claimed in Claim 3, wherein the processor is arranged to derive the minimum drive pulse structure for the needle control valve subsequent to deriving the minimum drive pulse structure for the pressure control valve.

5. A controller as claimed in any preceding claim, wherein drive pulse structures are determined while the engine is governed at a substantially constant engine speed.

6. A controller as claimed in any preceding claim, wherein the engine system parameter comprises fuel value data relating to the quantity of fuel injected per injection cycle per injector for the at least one further injector.

7. A controller as claimed in Claim 6 , wherein the processor is arranged to determine the minimum drive pulse structure for the pressure control valve by (i) reducing the widths of the drive pulse structures for all the control valves within the injector until the fuel value data indicates that injection has stopped, (ii) progressively increasing the widths of the drive pulse structures for the control valves until the fuel value data indicates that injection has commenced, (iii) setting the width of the drive pulse for the pressure control valve at the point that injection commences as the minimum drive pulse.

8. A controller as claimed in Claim 7, wherein the processor is arranged to determine the minimum drive pulse structure for the needle control valve by (i) applying a control function to the pressure control valve using the minimum drive pulse structure for the pressure control valve determined in claim 6, (ii) progressively decreasing the width of the drive pulse structures for the needle control valve until the fuel value data indicates that injection has ceased, (iii) setting the width of the drive pulse for the needle control valve at the point just before injection ceased as the minimum drive pulse.

9. A controller as claimed in any preceding claim, wherein the engine system parameter comprises data relating to the rotation of a crank wheel within the engine.

10. A controller as claimed in Claim 9, wherein the processor is arranged to determine the speed of the crank wheel for the injector and the speed of the crank wheel for one of the at least one further injector and to monitor the relative differences between the calculated crank speeds.

11. A controller as claimed in Claim 10, wherein the crank wheel comprises a group of regularly spaced crank teeth associated with each injector within the engine and the processor is arranged to monitor the relative difference between calculated crank speeds for a given crank tooth or combination of crank teeth.

12. A controller as claimed in any of Claims 9 to 11, wherein the processor is arranged to determine the minimum drive pulse structure for the pressure control valve by (i) reducing the widths of the drive pulse structures for all the control valves within the injector until the data relating to the crank wheel rotation indicates that injection has stopped, (ii) progressively increasing the widths of the drive pulse structures for the control valves until the data relating to the crank wheel rotation indicates that injection has commenced, (iii) setting the width of the drive pulse for the pressure control valve at the point that injection commences as the minimum drive pulse.

13. A controller as claimed in Claim 12, wherein the processor is arranged to determine the minimum drive pulse structure for the needle control valve by (i) applying a control function to the pressure control valve using the minimum drive pulse structure for the pressure control valve determined in claim 12, (ii) progressively decreasing the width of the drive pulse structures for the needle control valve until the data relating to the crank wheel rotation indicates that injection has ceased, (iii) setting the width of the drive pulse for the needle control valve at the point just before injection ceased as the minimum drive pulse.

14. A controller as claimed in any preceding claim, wherein the processor is arranged to determine drive pulse structures for each of the at least one further injectors within the engine in turn.

15. A vehicle comprising a controller as claimed in any preceding claim.

16. A diagnostic unit for use with a vehicle comprising a controller as claimed in any of Claims 1 to 14.

17. A method for determining drive pulse structures for controlling the operation of control valves of a fuel-injected engine, the engine comprising a first injector and at least one further injector, and the method comprising:

    receiving engine data relating to an engine system parameter;
    outputting a control function for controlling the injector valves of the first injector, the control function being derived from a control valve drive pulse structure;
    controlling the control function output from the controller by (i) progressively modifying the control valve drive pulse structures, (ii) detecting injection events within the first injector by measuring changes in the engine data and (iii) determining the minimum width of the drive pulse structures that permit injection to take place.

18. A carrier medium for carrying a computer readable code for controlling a processor or computer to carry out the method of Claim 17.

CAM *38*

*10*

*34*

*36*

Pressure
Control
Valve

*32*

*40*

*12*

*44*

*48*

Injection
Control
Valve

*50*

*46*

*16b*

*14*

*22*

*16a*

*30*

*28*

*42*

*14a*

*26*

*24*

*16*

*20*

*18*

FIGURE 1

FIGURE 2

EP 1 813 796 A2

FIGURE 3

FIGURE 4

FIGURE 5

FIGURE 6

FIGURE 7

FIGURE 8

FIGURE 9

FIGURE 10

FIGURE 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2305727 A

- US 6082326 A